(19) Europäisches Patentamt
European Patent Office
Office européen des brevets

(11) EP 4 806 712 A1

(12) EUROPEAN PATENT APPLICATION
published in accordance with Art. 153(4) EPC

(43) Date of publication:
**16.09.2026 Bulletin 2026/38**

(21) Application number: **24887427.3**

(22) Date of filing: **28.06.2024**

(51) International Patent Classification (IPC):
***B60L 15/20*** (2006.01) ***B60L 3/10*** (2006.01)

(52) Cooperative Patent Classification (CPC):
Y02T 10/72

(86) International application number:
**PCT/CN2024/102520**

(87) International publication number:
**WO 2025/097803 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.11.2023 CN 202311494579**

(71) Applicant: **BYD Company Limited**
**Shenzhen, Guangdong 518118 (CN)**

(72) Inventors:
- **DUAN, Ziwen**
  **Shenzhen, Guangdong 518118 (CN)**
- **WANG, Jiquan**
  **Shenzhen, Guangdong 518118 (CN)**
- **FU, Hu**
  **Shenzhen, Guangdong 518118 (CN)**
- **ZHAO, Mengmeng**
  **Shenzhen, Guangdong 518118 (CN)**
- **MA, Weizhong**
  **Shenzhen, Guangdong 518118 (CN)**

(74) Representative: **Mathys & Squire**
**32 London Bridge Street**
**The Shard**
**London SE1 9SG (GB)**

# (54) TORQUE DISTRIBUTION METHOD, APPARATUS, AND VEHICLE

(57) A torque distribution method, an apparatus, and a vehicle. The method comprises: acquiring a torque reduction request of a TCS and a whole vehicle demand torque; based on the torque reduction request of the TCS, determining a target torque; on the basis of the target torque, distributing the whole vehicle demand torque.

Acquire the torque reduction request sent by TCS and the vehicle demand torque
S110
Determine the target torque based on the torque reduction request sent by TCS
S120
Distribute the vehicle demand torque according to the target torque
S130

FIG. 1



Processed by Luminess, 75001 PARIS (FR)

## Description

### CROSS-REFERENCE TO RELATED APPLICATIONS

The present disclosure claims priority to Chinese Patent Application No. 202311494579.7 filed on November 9, 2023 and the invention title of "TORQUE DISTRIBUTION METHOD, DEVICE AND VEHICLE", which is incorporated herein by reference in its entirety.

### FIELD

The present disclosure relates to the field of electric vehicle technology, and more particularly, to a torque distribution method, device and vehicle.

### BACKGROUND

In a traditional fuel-powered vehicle, a front axle and a rear axle of a four-wheel drive system are connected by a central differential, which ensures driving force on all wheels under any and all operating conditions. The central differential can be locked when a certain axle of the vehicle slips, preventing the engine from transmitting all power to the slipping wheel when the vehicle slips, thereby achieving escape from a difficult situation.

For new energy vehicles, as electric drive is used, both the front axle and the rear axle are equipped with drive motors. How to assist the vehicle in escaping from difficult situations under different slipping conditions without a central differential is a problem to be solved.

### SUMMARY

An objective of the present disclosure is to provide a new technical solution for a torque distribution method.

According to a first aspect of the present disclosure, a torque distribution method is provided. The method includes:

a torque reduction request of a TCS is acquired; a vehicle demand torque is acquired;
a target torque is determined based on the torque reduction request of the TCS; and
the vehicle demand torque is distributed according to the target torque.

In an embodiment, determining the target torque based on the torque reduction request of the TCS includes:

a torque transfer level is determined based on the torque reduction request of the TCS; and
a corresponding target torque is determined according to the torque transfer level, and the vehicle demand torque is distributed.

In an embodiment, determining the torque transfer level based on the torque reduction request of the TCS includes:

a minimum axle speed is acquired when the torque reduction request of the TCS is a front axle torque reduction request or a rear axle torque reduction request; and
the torque transfer level is determined as a first-level torque transfer if the minimum axle speed is less than a predetermined first threshold;
wherein the minimum axle speed is a minimum value of a front axle speed and a rear axle speed.

In an embodiment, the method further includes:

a duration of the first-level torque transfer is acquired; and
the torque transfer level is determined as a second-level torque transfer if the duration of the first-level torque transfer is greater than a second threshold, and the minimum axle speed is less than a predetermined second threshold.

In an embodiment, determining the torque transfer level based on the torque reduction request of the TCS includes:
the torque transfer level is determined as a second-level torque transfer when the torque reduction request of the TCS is a front axle torque reduction request and a rear axle torque reduction request.

In an embodiment, determining the corresponding target torque according to the torque transfer level, and distributing the vehicle demand torque includes:

a torque transfer coefficient corresponding to the torque transfer level is determined;
an initial torque distribution coefficient is acquired; and
a front axle target torque and a rear axle target torque are determined according to the vehicle demand torque, the initial torque distribution coefficient and the torque transfer coefficient, so as to distribute the vehicle demand torque.

In an embodiment, determining the torque transfer coefficient corresponding to the torque transfer level includes:

the initial torque distribution coefficient, a steering wheel angle and the minimum axle speed are acquired when the torque transfer level is the first-level torque transfer;
a steering wheel angle-based transfer coefficient is determined according to the steering wheel angle, and a minimum axle speed-based transfer coefficient is determined according to the minimum axle speed; and
the torque transfer coefficient corresponding to the first-level torque transfer is determined according to the initial torque distribution coefficient, the steering wheel angle-based transfer coefficient and the minimum axle speed-based transfer coefficient;
wherein the minimum axle speed is a minimum value of the front axle speed and the rear axle speed.

In an embodiment, determining the torque transfer coefficient corresponding to the first-level torque transfer according to the initial torque distribution coefficient, the steering wheel angle-based transfer coefficient and the minimum axle speed-based transfer coefficient includes:

a front axle post-torque-reduction demand torque is acquired when the torque reduction request of the TCS is the front axle torque reduction request;
a front axle initial demand torque is determined according to the initial torque distribution coefficient and the vehicle demand torque;
a torque transfer value is determined according to the front axle initial demand torque and the front axle post-torque-reduction demand torque; and
the torque transfer coefficient corresponding to the first-level torque transfer is determined according to the torque transfer value, the vehicle demand torque, the steering wheel angle-based transfer coefficient and the minimum axle speed-based transfer coefficient.

In an embodiment, determining the torque transfer coefficient corresponding to the first-level torque transfer according to the initial torque distribution coefficient, the steering wheel angle-based transfer coefficient and the minimum axle speed-based transfer coefficient includes:

a rear axle post-torque-reduction demand torque is acquired when the torque reduction request of the TCS is the rear axle torque reduction request;
a rear axle initial demand torque is determined according to the initial torque distribution coefficient and the vehicle demand torque;
a torque transfer value is determined according to the rear axle initial demand torque and the rear axle post-torque-reduction demand torque; and
the torque transfer coefficient corresponding to the first-level torque transfer is determined according to the torque transfer value, the vehicle demand torque, the steering wheel angle-based transfer coefficient and the minimum axle speed-based transfer coefficient.

In an embodiment, determining the torque transfer coefficient corresponding to the torque transfer level includes:

a steering wheel angle, an axle speed difference and the minimum axle speed are acquired when the torque transfer level is the second-level torque transfer; wherein the axle speed difference is a difference between the front axle speed and the rear axle speed, and the minimum axle speed is a minimum value of the front axle speed and the rear axle speed;
a steering wheel angle-based transfer coefficient is determined according to the steering wheel angle, an axle speed difference-based transfer coefficient is determined according to the axle speed difference, and a minimum axle speed-based transfer coefficient is determined according to the minimum axle speed; and
the torque transfer coefficient corresponding to the second-level torque transfer is determined according to the steering wheel angle-based transfer coefficient, the axle speed difference-based transfer coefficient and the minimum

axle speed-based transfer coefficient.

In an embodiment, determining the front axle target torque and the rear axle target torque according to the vehicle demand torque, the initial torque distribution coefficient and the torque transfer coefficient, so as to distribute the vehicle demand torque includes:

a target distribution coefficient for front axle torque and a target distribution coefficient for rear axle torque are determined according to the initial torque distribution coefficient and the torque transfer coefficient;
the front axle target torque is determined according to the vehicle demand torque and the target distribution coefficient for front axle torque; and
the rear axle target torque is determined according to the vehicle demand torque and the target distribution coefficient for rear axle torque, so as to distribute the vehicle demand torque.

In an embodiment, after the front axle target torque and the rear axle target torque are determined, the method further includes:

a front motor transmission ratio, a rear motor transmission ratio and gear position information are acquired;
a front motor target torque is determined according to the front axle target torque and the front motor transmission ratio;
a rear motor target torque is determined according to the rear axle target torque and the rear motor transmission ratio; and
a front motor and a rear motor are controlled to output corresponding torques respectively according to the front motor target torque, the rear motor target torque and the gear position information.

In an embodiment, before acquiring the torque reduction request of the TCS and the vehicle demand torque, the method further includes:

motor system status information and high-voltage system status information are acquired;
whether a vehicle driving capability is normal is detected according to the motor system status information and the high-voltage system status information; and
the acquiring a torque reduction request of a TCS and a vehicle demand torque is executed when the vehicle driving capability is normal.

In an embodiment, the motor system status information includes a motor temperature, a maximum allowable drive torque and communication status information; the high-voltage system status information includes battery system status information and high-voltage line status information; and

wherein detecting whether the vehicle driving capability is normal according to the motor system status information and the high-voltage system status information includes:
the vehicle driving capability is determined as abnormal when at least one of the following conditions is met: the motor temperature is greater than or equal to a first threshold; the maximum allowable drive torque is less than or equal to a second threshold; the communication status information indicates a fault; the battery system status information indicates a fault; or the high-voltage line status information indicates a fault.

According to a second aspect of the present disclosure, a torque distribution device is provided, including:

an acquisition module, configured to acquire a torque reduction request of a TCS and a vehicle demand torque;
a target torque determination module, configured to determine a target torque based on the torque reduction request of the TCS; and
a distribution module, configured to distribute the vehicle demand torque according to the target torque.

According to a third aspect of the present disclosure, a torque distribution device is provided, including a memory and a processor, wherein the memory stores computer instructions, which, when executed by the processor, implement the torque distribution method according to any embodiment of the first aspect.
According to a fourth aspect of the present disclosure, a vehicle is provided, including: the torque distribution device according to the second aspect or the third aspect.
In the torque distribution method provided by the present disclosure, based on different vehicle slipping conditions, front and rear axle torques can be intelligently distributed to assist the vehicle in escaping from a difficult

situation.

The features and advantages of the embodiments of the present specification will become clear from the following detailed description of exemplary embodiments of the present specification with reference to the accompanying drawings.

## BRIEF DESCRIPTION OF THE DRAWINGS

The drawings incorporated in the specification and forming a part of the specification illustrate embodiments of the present specification and, together with the description, serve to explain the principles of the embodiments of the present specification.

FIG. 1 is a processing flow chart of a torque distribution method according to an embodiment of the present disclosure.
FIG. 2 is a schematic block diagram of a torque distribution device according to an embodiment of the present disclosure.
FIG. 3 is a schematic diagram of a hardware structure of a torque distribution device according to an embodiment of the present disclosure.
FIG. 4 is a block diagram of a vehicle according to an embodiment of the present disclosure.

## DETAILED DESCRIPTION

Various exemplary embodiments of the present specification will now be described in detail with reference to the accompanying drawings.

The following description of at least one exemplary embodiment is merely illustrative and is in no way intended to limit the present specification and its application or use.

It is noted that similar reference numerals and letters indicate similar items in the following drawings, and thus once an item is defined in one drawing, it need not be further discussed in subsequent drawings.

<Embodiment 1>

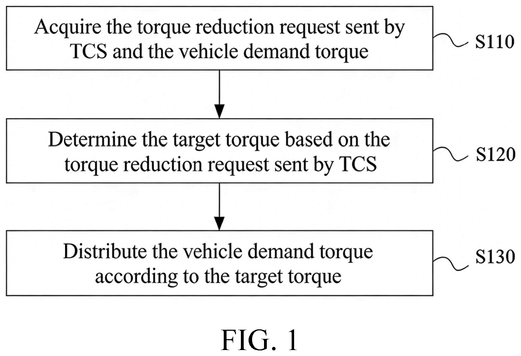

An embodiment of the present disclosure provides a torque distribution method. As shown in FIG. 1, the torque distribution method in this embodiment includes steps S110 to S130.

Step S110: a torque reduction request of a TCS and a vehicle demand torque are acquired.

The torque reduction request may be a front axle torque reduction request, or a rear axle torque reduction request, or a front axle torque reduction request and a rear axle torque reduction request.

The front axle torque reduction request is a request sent by a TCS (Traction Control System) of the vehicle to a torque distribution device when the TCS detects front axle slip and an activation state of the front axle TCS is active.

The rear axle torque reduction request is a request sent by the TCS of the vehicle to the torque distribution device when the TCS detects rear axle slip and an activation state of the rear axle TCS is active.

The vehicle demand torque is determined according to current vehicle gear position information and accelerator pedal depth information. Specifically, current vehicle gear position information and accelerator pedal depth information are acquired through a CAN bus, and the vehicle demand torque is obtained by looking up a table according to the current vehicle gear position information and accelerator pedal depth information.

Step S120: a target torque is determined based on the torque reduction request of the TCS.

In an embodiment, a torque transfer level is determined based on the torque reduction request of the TCS, and a corresponding target torque is determined according to the torque transfer level to distribute the vehicle demand torque.

In an example, when the torque reduction request of the TCS is a front axle torque reduction request or a rear axle torque reduction request, a minimum axle speed is acquired. The minimum axle speed is a minimum value of a front axle speed and a rear axle speed. It is determined that the torque transfer level is a first-level torque transfer if the minimum axle speed is less than a predetermined first threshold.

Specifically, the front axle speed, the rear axle speed, and the minimum axle speed can be calculated according to the following calculation formulas:

$$\text{Front axle speed} = (\text{left front wheel speed} + \text{right front wheel speed}) / 2,$$

$$\text{Rear axle speed} = (\text{left rear wheel speed} + \text{right rear wheel speed}) / 2,$$

$$\text{Minimum axle speed} = \min(\text{front axle speed, rear axle speed}),$$

wherein the left front wheel speed can be detected by a wheel speed sensor arranged on the left front wheel, the right front wheel speed can be detected by a wheel speed sensor arranged on the right front wheel, the left rear wheel speed can be detected by a wheel speed sensor arranged on the left rear wheel, and the right rear wheel speed can be detected by a wheel speed sensor arranged on the right rear wheel.

In an example, after the torque transfer level is determined to be the first-level torque transfer, a duration of the first-level torque transfer is acquired. If the duration of the first-level torque transfer is greater than a second threshold, and the minimum axle speed is less than a predetermined second threshold, the torque transfer level is determined to be a second-level torque transfer.

It will be noted that the predetermined first threshold and the predetermined second threshold are two independent and unequal values.

In an example, when the torque reduction request of the TCS is the front axle torque reduction request and the rear axle torque reduction request, the torque transfer level is determined to be the second-level torque transfer.

Step S130: the vehicle demand torque is distributed according to the target torque.

In an embodiment, step S130 includes steps S131 to S133.

Step S131: a torque transfer coefficient corresponding to the torque transfer level is determined.

Step S132: an initial torque distribution coefficient is acquired.

The initial torque distribution coefficient is a preset value determined under non-slip conditions of the vehicle, for example, set to 50%.

The initial torque distribution coefficient may be an initial distribution coefficient for front axle torque, and an initial distribution coefficient for rear axle torque can be calculated according to the following calculation formula:

Initial distribution coefficient for rear axle torque = 1 - initial distribution coefficient for front axle torque.

The initial torque distribution coefficient may be an initial distribution coefficient for rear axle torque, and an initial distribution coefficient for front axle torque can be calculated according to the following calculation formula:

Initial distribution coefficient for front axle torque = 1 - initial distribution coefficient for rear axle torque.

The initial torque distribution coefficient may include an initial distribution coefficient for front axle torque and an initial distribution coefficient for rear axle torque. The sum of the initial distribution coefficient for front axle torque and the initial distribution coefficient for rear axle torque is equal to 1.

Step S133: a front axle target torque and a rear axle target torque are determined according to the vehicle demand torque, the initial torque distribution coefficient and the torque transfer coefficient, so as to distribute the vehicle demand torque.

A target distribution coefficient for front axle torque and a target distribution coefficient for rear axle torque are determined according to the initial torque distribution coefficient and the torque transfer coefficient. The front axle target torque is determined according to the vehicle demand torque and the target distribution coefficient for front axle torque, and the rear axle target torque is determined according to the vehicle demand torque and the target distribution coefficient for rear axle torque.

In an embodiment, step S131 includes steps S131a to S131c.

Step S131a: when the torque transfer level is the first-level torque transfer, the initial torque distribution coefficient, a steering wheel angle and the minimum axle speed are acquired.

The steering wheel angle can be acquired by a sensor. The minimum axle speed is the minimum value of the front axle speed and the rear axle speed, which can refer to the calculation formula of the minimum axle speed described above.

Step S131b: a steering wheel angle-based transfer coefficient is determined according to the steering wheel angle, and a minimum axle speed-based transfer coefficient is determined according to the minimum axle speed.

The steering wheel angle-based transfer coefficient is obtained by looking up a table according to the steering wheel angle. The minimum axle speed-based transfer coefficient is obtained by looking up a table according to the minimum axle speed.

Step S131c: the torque transfer coefficient corresponding to the first-level torque transfer is determined according to the initial torque distribution coefficient, the steering wheel angle-based transfer coefficient and the minimum axle speed-based transfer coefficient.

In an embodiment, step S131c includes: when the torque reduction request of the TCS is the front axle torque reduction request, a front axle post-torque-reduction demand torque is acquired; a front axle initial demand torque is determined according to the initial torque distribution coefficient and the vehicle demand torque; a torque transfer value is

determined according to the front axle initial demand torque and the front axle post-torque-reduction demand torque; and the torque transfer coefficient corresponding to the first-level torque transfer is determined according to the torque transfer value, the vehicle demand torque, the steering wheel angle-based transfer coefficient and the minimum axle speed-based transfer coefficient.

The front axle post-torque-reduction demand torque is a pre-stored value and can be obtained directly.

The front axle initial demand torque is determined according to the initial torque distribution coefficient and the vehicle demand torque. When the initial torque distribution coefficient is the initial distribution coefficient for front axle torque, the front axle initial demand torque is calculated according to the following calculation formula:

Front axle initial demand torque = vehicle demand torque × initial distribution coefficient for front axle torque.

The torque transfer value is calculated according to the following calculation formula:

Torque transfer value = front axle initial demand torque - front axle post-torque-reduction demand torque.

The torque transfer coefficient is calculated according to the following calculation formula:

Torque transfer coefficient = (torque transfer value × steering wheel angle-based transfer coefficient × minimum axle speed-based transfer coefficient) / vehicle demand torque.

The target distribution coefficient for front axle torque, the target distribution coefficient for rear axle torque, the front axle target torque and the rear axle target torque are calculated according to the following calculation formulas:

Target distribution coefficient for front axle torque = initial distribution coefficient for front axle torque - torque transfer coefficient;

Target distribution coefficient for rear axle torque = 1 - target distribution coefficient for front axle torque,

Front axle target torque = vehicle demand torque × target distribution coefficient for front axle torque,

Rear axle target torque = vehicle demand torque × target distribution coefficient for rear axle torque.

When the torque reduction request of the TCS is the front axle torque reduction request and the torque transfer level is the first-level torque transfer, the front axle torque is reduced and the rear axle torque is increased, thereby achieving intelligent distribution of front and rear axle torques to assist the vehicle in escaping from a difficult situation.

In an embodiment, step S131c includes: when the torque reduction request of the TCS is the rear axle torque reduction request, a rear axle post-torque-reduction demand torque is acquired; a rear axle initial demand torque is determined according to the initial torque distribution coefficient and the vehicle demand torque; the torque transfer value is determined according to the rear axle initial demand torque and the rear axle post-torque-reduction demand torque; and the torque transfer coefficient corresponding to the first-level torque transfer is determined according to the torque transfer value, the vehicle demand torque, the steering wheel angle-based transfer coefficient and the minimum axle speed-based transfer coefficient.

The rear axle post-torque-reduction demand torque is a pre-stored value and can be obtained directly.

The rear axle initial demand torque is determined according to the initial torque distribution coefficient and the vehicle demand torque. When the initial torque distribution coefficient is the initial distribution coefficient for front axle torque, the rear axle initial demand torque is calculated according to the following calculation formula:

Rear axle initial demand torque = vehicle demand torque × (1 - initial distribution coefficient for front axle torque).

The torque transfer value is calculated according to the following calculation formula:

Torque transfer value = rear axle initial demand torque - rear axle post-torque-reduction demand torque.

The torque transfer coefficient is calculated according to the following calculation formula:

Torque transfer coefficient = (torque transfer value × steering wheel angle-based transfer coefficient × minimum axle speed-based transfer coefficient) / vehicle demand torque.

The target distribution coefficient for front axle torque, the target distribution coefficient for rear axle torque, the front axle target torque and the rear axle target torque are calculated according to the following calculation formulas:

Target distribution coefficient for front axle torque = initial distribution coefficient for front axle torque + torque transfer coefficient;

Target distribution coefficient for rear axle torque = 1 - target distribution coefficient for front axle torque,

Front axle target torque = vehicle demand torque × target distribution coefficient for front axle torque,

Rear axle target torque = vehicle demand torque × target distribution coefficient for rear axle torque.

When the torque reduction request of the TCS is the rear axle torque reduction request and the torque transfer level is the first-level torque transfer, the front axle torque is increased and the rear axle torque is reduced, thereby achieving intelligent distribution of front and rear axle torques to assist the vehicle in escaping from a difficult situation.

In an embodiment, step S131 includes steps S1311 to S1313.

Step S1311: when the torque transfer level is the second-level torque transfer, a steering wheel angle, an axle speed difference and the minimum axle speed are acquired; wherein the axle speed difference is a difference between the front axle speed and the rear axle speed, and the minimum axle speed is a minimum value of the front axle speed and the rear axle speed.

The steering wheel angle can be acquired by a sensor. The minimum axle speed can be calculated by referring to the calculation formula above. The axle speed difference is calculated according to the following calculation formula:

$$\text{Axle speed difference} = \text{front axle speed} - \text{rear axle speed},$$

wherein the front axle speed and the rear axle speed can be calculated by referring to the calculation formulas above.

Step S1312: a steering wheel angle-based transfer coefficient is determined according to the steering wheel angle, an axle speed difference-based transfer coefficient is determined according to the axle speed difference, and a minimum axle speed-based transfer coefficient is determined according to the minimum axle speed.

The steering wheel angle-based transfer coefficient is obtained by looking up a table according to the steering wheel angle. The axle speed difference-based transfer coefficient is obtained by looking up a table according to the axle speed difference. The minimum axle speed-based transfer coefficient is obtained by looking up a table according to the minimum axle speed.

Step S1313: the torque transfer coefficient corresponding to the second-level torque transfer is determined according to the steering wheel angle-based transfer coefficient, the axle speed difference-based transfer coefficient and the minimum axle speed-based transfer coefficient.

The torque transfer coefficient is calculated according to the following calculation formula:

Torque transfer coefficient = steering wheel angle-based transfer coefficient × axle speed difference-based transfer coefficient × minimum axle speed-based transfer coefficient.

When the torque reduction request of the TCS is the front axle torque reduction request and the torque transfer level is the second-level torque transfer, the target distribution coefficient for front axle torque, the target distribution coefficient for rear axle torque, the front axle target torque and the rear axle target torque are calculated according to the following calculation formulas:

Target distribution coefficient for front axle torque = initial distribution coefficient for front axle torque - torque transfer coefficient;

Target distribution coefficient for rear axle torque = 1 - target distribution coefficient for front axle torque,

Front axle target torque = vehicle demand torque × target distribution coefficient for front axle torque,

Rear axle target torque = vehicle demand torque × target distribution coefficient for rear axle torque.

When the torque reduction request of the TCS is the front axle torque reduction request and the torque transfer level is the second-level torque transfer, the front axle torque is reduced and the rear axle torque is increased, thereby achieving intelligent distribution of front and rear axle torques to assist the vehicle in escaping from a difficult situation.

When the torque reduction request of the TCS is the rear axle torque reduction request and the torque transfer level is the second-level torque transfer, the target distribution coefficient for front axle torque, the target distribution coefficient for rear axle torque, the front axle target torque and the rear axle target torque are calculated according to the following calculation formulas:

Target distribution coefficient for front axle torque = initial distribution coefficient for front axle torque + torque transfer coefficient;

Target distribution coefficient for rear axle torque = 1 - target distribution coefficient for front axle torque,

Front axle target torque = vehicle demand torque × target distribution coefficient for front axle torque,

Rear axle target torque = vehicle demand torque × target distribution coefficient for rear axle torque.

When the torque reduction request of the TCS is the rear axle torque reduction request and the torque transfer level is the second-level torque transfer, the front axle torque is increased and the rear axle torque is reduced, thereby achieving intelligent distribution of front and rear axle torques to assist the vehicle in escaping from a difficult situation.

When the torque reduction request of the TCS is the front axle torque reduction request and the rear axle torque reduction request and the torque transfer level is the second-level torque transfer, the target distribution coefficient for front axle torque, the target distribution coefficient for rear axle torque, the front axle target torque and the rear axle target torque are calculated according to the following calculation formulas:

Target distribution coefficient for front axle torque = initial distribution coefficient for front axle torque - torque transfer coefficient;

Target distribution coefficient for rear axle torque = (1 - initial distribution coefficient for front axle torque) - torque transfer coefficient,

Front axle target torque = vehicle demand torque × target distribution coefficient for front axle torque,

Rear axle target torque = vehicle demand torque × target distribution coefficient for rear axle torque.

According to the above calculation formulas, it can be obtained that the sum of the target distribution coefficient for front axle torque and the target distribution coefficient for rear axle torque is not equal to 1. When the torque reduction request of the TCS is the front axle torque reduction request and the rear axle torque reduction request and the torque transfer level is the second-level torque transfer, the front axle torque is reduced and the rear axle torque is reduced.

In an embodiment, after step S133, the method further includes: a front motor transmission ratio and a rear motor transmission ratio are acquired; a front motor target torque is determined according to the front axle target torque, the front motor transmission ratio and gear position information; a rear motor target torque is determined according to the rear axle target torque, the rear motor transmission ratio; and the front motor and the rear motor are controlled to output corresponding torques respectively according to the front motor target torque, the rear motor target torque and the gear position information.

Specifically, the front motor target torque and the rear motor target torque are calculated according to the

following calculation formulas:

Front motor target torque = front axle target torque / front motor transmission ratio,

Rear motor target torque = rear axle target torque / rear motor transmission ratio.

After the front motor target torque and the rear motor target torque are calculated, the front motor target torque, the rear motor target torque and the gear position information are sent to a motor controller, so that the motor controller drives the front motor and the rear motor to output corresponding target torques by controlling a current and a voltage output from a battery system. The gear position information includes a D gear and an R gear. The motor controller controls a rotation direction of the motor according to the gear position information.

In an embodiment, before step S110, the method further includes: motor system status information and high-voltage system status information are acquired; whether a vehicle driving capability is normal is detected according to the motor system status information and the high-voltage system status information; executing the step of determining the locking state information of the differential lock according to the locking request of the differential lock if the vehicle driving capability is normal. If the vehicle driving capability is abnormal, the locking state information of the differential lock indicates that neither the front differential lock nor the rear differential lock is locked.

The motor system status information includes a motor temperature, a maximum allowable drive torque, and communication status information. The high-voltage system status information includes battery system status information and high-voltage line status information. The motor temperature, the maximum allowable drive torque, the communication status information, the battery system status information and the high-voltage line status information can be acquired through a CAN bus. The maximum allowable drive torque is determined according to actual operating conditions of the vehicle and is a value obtained by real-time detection.

In this embodiment, the battery system status information can be determined as faulty if at least one of the following conditions is met, and thus the vehicle driving capability can be determined as abnormal: the motor temperature is greater than or equal to the first threshold, the maximum allowable drive torque is less than or equal to the second threshold, or the communication status information indicates a fault.

The high-voltage system status information can be determined as faulty if at least one of the following conditions is met, and thus the vehicle driving capability can be determined as abnormal: the battery system status information indicates a fault, or the high-voltage line status information indicates a fault.

In summary, the vehicle driving capability is determined to be abnormal when at least one of the following conditions is met: the motor temperature is greater than or equal to a first threshold; the maximum allowable drive torque is less than or equal to a second threshold; the communication status information indicates a fault; the battery system status information indicates a fault; or the high-voltage line status information indicates a fault.

<Embodiment 2>

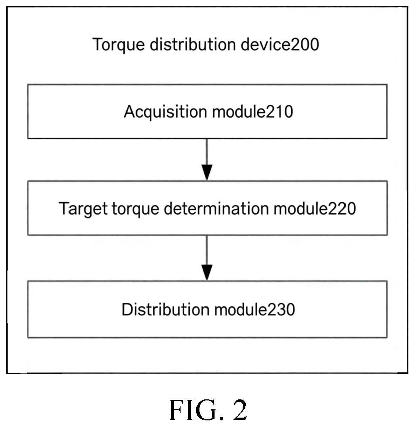

An embodiment of the present disclosure provides a torque distribution device, as shown in FIG. 2. The torque distribution device 200 includes an acquisition module 210, a target torque determination module 220 and a distribution module 230.

The acquisition module 210 is configured to acquire a torque reduction request of a TCS and a vehicle demand torque.

The target torque determination module 220 is configured to determine a target torque based on the torque reduction request of the TCS.

The distribution module 230 is configured to distribute the vehicle demand torque according to the target torque.

In an embodiment, the target torque determination module 220 is further configured to determine a torque transfer level based on the torque reduction request of the TCS. The distribution module 230 is further configured to determine a corresponding torque transfer strategy according to the torque transfer level, and distribute the vehicle demand torque.

In an embodiment, the target torque determination module 220 is further configured to: acquire a minimum axle speed when the torque reduction request of the TCS is a front axle torque reduction request or a rear axle torque reduction request; and determine that the torque transfer level is a first-level torque transfer if the minimum axle speed is less than a predetermined first threshold; wherein the minimum axle speed is a minimum value of a front axle speed and a rear axle speed.

In an embodiment, the target torque determination module 220 is further configured to: acquire a duration of the first-level torque transfer; and determine that the torque transfer level is a second-level torque transfer if the duration of the first-level torque transfer is greater than a second threshold, and the minimum axle speed is less than a predetermined

second threshold.

In an embodiment, the target torque determination module 220 is further configured to determine that the torque transfer level is a second-level torque transfer when the torque reduction request of the TCS is a front axle torque reduction request and a rear axle torque reduction request.

In an embodiment, the distribution module 230 is further configured to: determine a torque transfer coefficient corresponding to the torque transfer level; acquire an initial torque distribution coefficient; and determine a front axle target torque and a rear axle target torque according to the vehicle demand torque, the initial torque distribution coefficient and the torque transfer coefficient, so as to distribute the vehicle demand torque.

In an embodiment, the distribution module 230 is further configured to: acquire the initial torque distribution coefficient, a steering wheel angle and the minimum axle speed when the torque transfer level is the first-level torque transfer; determine a steering wheel angle-based transfer coefficient according to the steering wheel angle, and determine a minimum axle speed-based transfer coefficient according to the minimum axle speed; and determine the torque transfer coefficient corresponding to the first-level torque transfer according to the initial torque distribution coefficient, the steering wheel angle-based transfer coefficient and the minimum axle speed-based transfer coefficient; wherein the minimum axle speed is a minimum value of the front axle speed and the rear axle speed.

In an embodiment, the distribution module 230 is further configured to: acquire a front axle post-torque-reduction demand torque when the torque reduction request of the TCS is the front axle torque reduction request; determine a front axle initial demand torque according to the initial torque distribution coefficient and the vehicle demand torque; determine a torque transfer value according to the front axle initial demand torque and the front axle post-torque-reduction demand torque; and determine the torque transfer coefficient corresponding to the first-level torque transfer according to the torque transfer value, the vehicle demand torque, the steering wheel angle-based transfer coefficient and the minimum axle speed-based transfer coefficient.

In an embodiment, the distribution module 230 is further configured to: acquire a rear axle post-torque-reduction demand torque when the torque reduction request of the TCS is the rear axle torque reduction request; determine a rear axle initial demand torque according to the initial torque distribution coefficient and the vehicle demand torque; determine the torque transfer value according to the rear axle initial demand torque and the rear axle post-torque-reduction demand torque; and determine the torque transfer coefficient corresponding to the first-level torque transfer according to the torque transfer value, the vehicle demand torque, the steering wheel angle-based transfer coefficient and the minimum axle speed-based transfer coefficient.

In an embodiment, the distribution module 230 is further configured to: acquire a steering wheel angle, an axle speed difference and the minimum axle speed when the torque transfer level is the second-level torque transfer; wherein the axle speed difference is a difference between the front axle speed and the rear axle speed, and the minimum axle speed is a minimum value of the front axle speed and the rear axle speed; determine a steering wheel angle-based transfer coefficient according to the steering wheel angle, determine an axle speed difference-based transfer coefficient according to the axle speed difference, and determine a minimum axle speed-based transfer coefficient according to the minimum axle speed; and determine the torque transfer coefficient corresponding to the second-level torque transfer according to the steering wheel angle-based transfer coefficient, the axle speed difference-based transfer coefficient and the minimum axle speed-based transfer coefficient.

In an embodiment, the device further includes a motor target torque determination module. The motor target torque determination module is configured to: acquire a front motor transmission ratio, a rear motor transmission ratio and gear position information; determine a front motor target torque according to the front axle target torque and the front motor transmission ratio; determine a rear motor target torque according to the rear axle target torque and the rear motor transmission ratio; and control a front motor and a rear motor to output corresponding torques respectively according to the front motor target torque, the rear motor target torque and the gear position information.

In an embodiment, the device further includes a vehicle driving capability detection module. The vehicle driving capability detection module is configured to: acquire motor system status information and high-voltage system status information; and detect whether a vehicle driving capability is normal according to the motor system status information and the high-voltage system status information.

The locking state information determination module executes the operation of determining the locking state information of the differential lock according to the locking request of the differential lock only when the vehicle driving capability is normal.

In an embodiment, the motor system status information includes a motor temperature, a maximum allowable drive torque, and communication status information; the high-voltage system status information includes battery system status information and high-voltage line status information. The vehicle driving capability detection module is further configured to determine that the vehicle driving capability is abnormal when at least one of the following conditions is met: the motor temperature is greater than or equal to a first threshold; the maximum allowable drive torque is less than or equal to a second threshold; the communication status information indicates a fault; the battery system status information indicates a fault; or the high-voltage line status information indicates a fault.

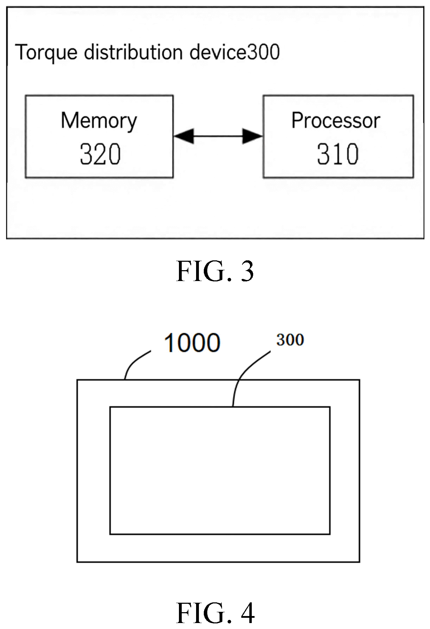

An embodiment of the present disclosure provides a torque distribution device, as shown in FIG. 3. The torque distribution device 300 includes a memory 320 and a processor 310. The memory 320 stores a computer program, and the computer program is configured to control the processor 310 to perform operations so as to execute the torque distribution method according to any of the above embodiments.

<Embodiment 3>

As shown in FIG. 4, an embodiment of the present disclosure provides a vehicle 1000, including the torque distribution device 300 according to any of the above embodiments.

The various embodiments in the present specification are described in a progressive manner, and identical or similar parts between the various embodiments can be referred to each other, and each embodiment focuses on the differences from other embodiments. For the vehicle embodiment, the relevant parts can be referred to the description of the method embodiment.

The above describes specific embodiments of the present specification. Other embodiments are within the scope of the appended claims. In some cases, the actions or steps recited in the claims can be performed in a different order from that in the embodiments and still achieve the desired result. In addition, the processes depicted in the accompanying drawings do not necessarily require the specific order or sequential order shown to achieve the desired result. In some implementations, multitasking and parallel processing are also possible or may be advantageous.

Embodiments of the present specification may be a system, a method, and/or a computer program product. The computer program product may include a computer-readable storage medium having computer instructions stored thereon for causing a processor to implement various aspects of the embodiments of the present specification.

The computer-readable storage medium may be a tangible device that can retain and store computer instructions used by a computer instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples of the computer-readable storage medium (a non-exhaustive list) include: a portable computer disk, a hard disk, a random access memory (RAM), a read-only memory (ROM), an erasable programmable read-only memory (EPROM or flash memory), a static random access memory (SRAM), a portable compact disc read-only memory (CD-ROM), a digital versatile disc (DVD), a memory stick, a floppy disk, a mechanical encoding device, such as a punch card or a raised structure in a groove with computer instructions stored thereon, and any suitable combination thereof. The computer-readable storage medium used herein is not interpreted as a transient signal itself, such as radio waves or other freely propagating electromagnetic waves, electromagnetic waves propagating through a waveguide or other transmission medium (e.g., light pulses through an optical fiber cable), or electrical signals transmitted through wires.

The computer instructions described herein can be downloaded from the computer-readable storage medium to various computing/processing devices, or to an external computer or an external storage device via a network, such as the Internet, a local area network, a wide area network and/or a wireless network. The network may include copper transmission cables, optical fiber transmission, wireless transmission, routers, firewalls, switches, gateway computers and/or edge servers. A network adapter card or network interface in each computing/processing device receives the computer instructions from the network and forwards the computer instructions for storage in a computer-readable storage medium in each computing/processing device.

The flowcharts and block diagrams in the accompanying drawings illustrate the architecture, functions and operations of possible implementations of systems, methods and computer program products according to various embodiments of the present specification. In this regard, each block in the flowcharts or block diagrams may represent a module, a program segment, or a part of computer instructions, and the module, the program segment, or the part of computer instructions includes one or more executable computer instructions for implementing specified logical functions. In some alternative implementations, the functions noted in the blocks may also occur in an order different from that noted in the drawings. For example, two consecutive blocks may actually be executed substantially in parallel, and they may sometimes be executed in reverse order, depending on the functions involved. It will also be noted that each block in the block diagrams and/or flowcharts, and combinations of blocks in the block diagrams and/or flowcharts, can be implemented by a dedicated hardware-based system that performs specified functions or actions, or by a combination of dedicated hardware and computer instructions. It is well known to those skilled in the art that implementation by means of hardware, implementation by means of software, and implementation by means of a combination of software and hardware are equivalent.

The above has described various embodiments of the present specification. The above description is exemplary rather than exhaustive, and is not limited to the disclosed embodiments. Many modifications and variations will be apparent to those of ordinary skill in the art without departing from the scope of the described embodiments. The selection of terms used herein is intended to best explain the principles, practical applications, or technical improvements of the embodiments in the market, or to enable other ordinary skilled in the art to understand the embodiments disclosed herein.

## Claims

1. A torque distribution method, comprising:

   acquiring a torque reduction request of a TCS and a vehicle demand torque;
   determining a target torque based on the torque reduction request of the TCS; and
   distributing the vehicle demand torque according to the target torque.

2. The method according to claim 1, wherein determining the target torque based on the torque reduction request of the TCS comprises:

   determining a torque transfer level based on the torque reduction request of the TCS; and
   determining a corresponding target torque according to the torque transfer level, and distributing the vehicle demand torque.

3. The method according to claim 2, wherein determining the torque transfer level based on the torque reduction request of the TCS comprises:

   acquiring a minimum axle speed when the torque reduction request of the TCS is a front axle torque reduction request or a rear axle torque reduction request; and
   determining that the torque transfer level is a first-level torque transfer if the minimum axle speed is less than a predetermined first threshold;
   wherein the minimum axle speed is a minimum value of a front axle speed and a rear axle speed.

4. The method according to claim 3, further comprising:

   acquiring a duration of the first-level torque transfer; and
   determining that the torque transfer level is a second-level torque transfer if the duration of the first-level torque transfer is greater than a second threshold, and the minimum axle speed is less than a predetermined second threshold.

5. The method according to any one of claims 2 to 4, wherein determining the torque transfer level based on the torque reduction request of the TCS comprises:
   determining that the torque transfer level is a second-level torque transfer when the torque reduction request of the TCS is a front axle torque reduction request and a rear axle torque reduction request.

6. The method according to any one of claims 2 to 4, wherein determining the corresponding target torque according to the torque transfer level, and distributing the vehicle demand torque comprises:

   determining a torque transfer coefficient corresponding to the torque transfer level;
   acquiring an initial torque distribution coefficient; and
   determining a front axle target torque and a rear axle target torque according to the vehicle demand torque, the initial torque distribution coefficient and the torque transfer coefficient, to distribute the vehicle demand torque.

7. The method according to claim 6, wherein determining the torque transfer coefficient corresponding to the torque transfer level comprises:

   acquiring the initial torque distribution coefficient, a steering wheel angle and the minimum axle speed when the torque transfer level is the first-level torque transfer;
   determining a steering wheel angle-based transfer coefficient according to the steering wheel angle, and determining a minimum axle speed-based transfer coefficient according to the minimum axle speed; and
   determining the torque transfer coefficient corresponding to the first-level torque transfer according to the initial torque distribution coefficient, the steering wheel angle-based transfer coefficient and the minimum axle speed-based transfer coefficient;
   wherein the minimum axle speed is a minimum value of the front axle speed and the rear axle speed.

8. The method according to claim 7, wherein determining the torque transfer coefficient corresponding to the first-level torque transfer according to the initial torque distribution coefficient, the steering wheel angle-based transfer

coefficient and the minimum axle speed-based transfer coefficient comprises:

acquiring a front axle post-torque-reduction demand torque when the torque reduction request of the TCS is the front axle torque reduction request;
determining a front axle initial demand torque according to the initial torque distribution coefficient and the vehicle demand torque;
determining a torque transfer value according to the front axle initial demand torque and the front axle post-torque-reduction demand torque; and
determining the torque transfer coefficient corresponding to the first-level torque transfer according to the torque transfer value, the vehicle demand torque, the steering wheel angle-based transfer coefficient and the minimum axle speed-based transfer coefficient.

**9.** The method according to claim 7 or 8, wherein determining the torque transfer coefficient corresponding to the first-level torque transfer according to the initial torque distribution coefficient, the steering wheel angle-based transfer coefficient and the minimum axle speed-based transfer coefficient comprises:

acquiring a rear axle post-torque-reduction demand torque when the torque reduction request of the TCS is the rear axle torque reduction request;
determining a rear axle initial demand torque according to the initial torque distribution coefficient and the vehicle demand torque;
determining a torque transfer value according to the rear axle initial demand torque and the rear axle post-torque-reduction demand torque; and
determining the torque transfer coefficient corresponding to the first-level torque transfer according to the torque transfer value, the vehicle demand torque, the steering wheel angle-based transfer coefficient and the minimum axle speed-based transfer coefficient.

**10.** The method according to any one of claims 6 to 9, wherein determining the torque transfer coefficient corresponding to the torque transfer level comprises:

acquiring a steering wheel angle, an axle speed difference and the minimum axle speed when the torque transfer level is the second-level torque transfer; wherein the axle speed difference is a difference between the front axle speed and the rear axle speed, and the minimum axle speed is a minimum value of the front axle speed and the rear axle speed;
determining a steering wheel angle-based transfer coefficient according to the steering wheel angle, determining an axle speed difference-based transfer coefficient according to the axle speed difference, and determining a minimum axle speed-based transfer coefficient according to the minimum axle speed; and
determining the torque transfer coefficient corresponding to the second-level torque transfer according to the steering wheel angle-based transfer coefficient, the axle speed difference-based transfer coefficient and the minimum axle speed-based transfer coefficient.

**11.** The method according to any one of claims 6 to 10, wherein determining the front axle target torque and the rear axle target torque according to the vehicle demand torque, the initial torque distribution coefficient and the torque transfer coefficient, so as to distribute the vehicle demand torque comprises:

determining a target distribution coefficient for front axle torque and a target distribution coefficient for rear axle torque according to the initial torque distribution coefficient and the torque transfer coefficient;
determining the front axle target torque according to the vehicle demand torque and the target distribution coefficient for front axle torque; and
determining the rear axle target torque according to the vehicle demand torque and the target distribution coefficient for rear axle torque, so as to distribute the vehicle demand torque.

**12.** The method according to any one of claims 6 to 11, wherein after the front axle target torque and the rear axle target torque are determined, the method further comprises:

acquiring a front motor transmission ratio, a rear motor transmission ratio and gear position information;
determining a front motor target torque according to the front axle target torque and the front motor transmission ratio;
determining a rear motor target torque according to the rear axle target torque and the rear motor transmission

ratio; and
controlling a front motor and a rear motor to output corresponding torques respectively according to the front motor target torque, the rear motor target torque and the gear position information.

**13.** The method according to any one of claims 1 to 12, wherein before acquiring the torque reduction request of the TCS and the vehicle demand torque, the method further comprises:

acquiring motor system status information and high-voltage system status information;
detecting whether a vehicle driving capability is normal according to the motor system status information and the high-voltage system status information; and
executing the acquiring a torque reduction request of a TCS and a vehicle demand torque when the vehicle driving capability is normal.

**14.** The method according to claim 13, wherein the motor system status information comprises a motor temperature, a maximum allowable drive torque and communication status information; the high-voltage system status information comprises battery system status information and high-voltage line status information; and
wherein detecting whether the vehicle driving capability is normal according to the motor system status information and the high-voltage system status information comprises:
determining that the vehicle driving capability is abnormal when at least one of the following conditions is met: the motor temperature is greater than or equal to a first threshold; the maximum allowable drive torque is less than or equal to a second threshold; the communication status information indicates a fault; the battery system status information indicates a fault; or the high-voltage line status information indicates a fault.

**15.** A torque distribution device (300), comprising:

a memory (320); and
a processor (310);
the memory storing computer instructions, which, when executed by the processor, implement the torque distribution method according to any one of claims 1 to 14.

**16.** A vehicle (1000), comprising: the torque distribution device (300) according to claim 15.

Acquire the torque reduction request sent by TCS and the vehicle demand torque
S110
Determine the target torque based on the torque reduction request sent by TCS
S120
Distribute the vehicle demand torque according to the target torque
S130

FIG. 1

Torque distribution device200
Acquisition module210
Target torque determination module220
Distribution module230

FIG. 2

Torque distribution device300
Memory
320
Processor
310

FIG. 3

1000
300

FIG. 4

**INTERNATIONAL SEARCH REPORT**

International application No.
**PCT/CN2024/102520**

**A. CLASSIFICATION OF SUBJECT MATTER**

B60L15/20(2006.01)i; B60L3/10(2006.01)i

According to International Patent Classification (IPC) or to both national classification and IPC

**B. FIELDS SEARCHED**

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNABS, CNTXT, CNKI: TCS, ASR, TRC, 扭矩, 转矩, 降扭, 目标, 分配, 转移, 轴速, 轮速, 系数; VEN, DWPI, WPABS, USTXT, EPTXT, WOTXT: TCS, ASR, TRC, torque, aim, target, distribute, transfer, wheel speed, coefficient.

**C. DOCUMENTS CONSIDERED TO BE RELEVANT**

| Category* | Citation of document, with indication, where appropriate, of the relevant passages | Relevant to claim No. |
|---|---|---|
| X | CN 115123179 A (GREAT WALL MOTOR CO., LTD.) 30 September 2022 (2022-09-30)<br>description, paragraphs 60-142, and figures 1-5 | 1-16 |
| X | CN 113968139 A (DONGFENG MOTOR CO., LTD. DONGFENG NISSAN PASSENGER VEHICLE COMPANY) 25 January 2022 (2022-01-25)<br>description, paragraphs 51-132, and figures 1-6 | 1-16 |
| A | CN 114475276 A (GAC AION NEW ENERGY AUTOMOBILE CO., LTD.) 13 May 2022 (2022-05-13)<br>entire document | 1-16 |
| A | CN 113085574 A (ZHEJIANG GEELY HOLDING GROUP CO., LTD. et al.) 09 July 2021 (2021-07-09)<br>entire document | 1-16 |
| A | KR 20100056942 A (HYUNDAI MOTOR CO., LTD. et al.) 28 May 2010 (2010-05-28)<br>entire document | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 September 2024** | **26 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/102520**

| Patent document cited in search report | | | Publication date (day/month/year) | Patent family member(s) | | | Publication date (day/month/year) |
|---|---|---|---|---|---|---|---|
| CN | 115123179 | A | 30 September 2022 | None | | | |
| CN | 113968139 | A | 25 January 2022 | None | | | |
| CN | 114475276 | A | 13 May 2022 | CN | 114475276 | B | 19 April 2024 |
| CN | 113085574 | A | 09 July 2021 | CN | 113085574 | B | 16 August 2022 |
| KR | 20100056942 | A | 28 May 2010 | KR | 100992721 | B1 | 05 November 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311494579